# FASCICULE DE BREVET EUROPEEN

(11) **EP 2 072 303 B1**
(45) Date de publication et mention de la délivrance du brevet: **13.06.2012**
(21) Numéro de dépôt: 08022011.4
(22) Date de dépôt: 18.12.2008
(51) Int. Cl.: B60J 7/00

(54) **Store d'occultation pour au moins une surface vitrée d'un pavillon d'un véhicule automobile, véhicule et élément de support correspondants**
Sonnenschutz für mindestens eine Glasfläche eines Kraftfahrzeugdachs, sowie entsprechendes Kraftfahrzeug und Befestigungselement
Blind for at least one glazed surface of an automobile roof, corresponding vehicle and support element

(30) Priorité: 23.05.2008 FR 0853381; 18.12.2007 FR 0759964
(43) Date de publication de la demande: 24.06.2009
(73) Titulaire: Advanced Comfort Systems France SAS - ACS France, 79302 Bressuire Cedex (FR)
(72) Inventeur: Reinhard, Christophe, 44240 La Chapelle Sur Erdre (FR); Dubouilh, Gilles, 79300 Bressuire (FR)
(74) Mandataire: Bioret, Ludovic

(56) Documents cités:
- EP-A- 1 359 036
- DE-A1-102005 054 187
- DE-C1- 4 422 646
- FR-A- 2 893 346
- US-B1- 6 582 014

## Description

### 1. Domaine de l'invention

Le domaine de l'invention est celui des véhicules automobile, et notamment des véhicules présentant une surface vitrée importante au niveau du pavillon. Plus précisément, l'invention concerne l'occultation de telles surfaces vitrées, notamment pour se protéger des rayons du soleil.

### 2. Solutions et inconvénients de l'art antérieur

La tendance actuelle, en matière de véhicule automobile, est de proposer de plus en plus de surfaces vitrées. Ainsi, notamment, on a proposé des véhicules présentant un pavillon équipé d'un ou plusieurs éléments vitrés. Dans certains cas, l'intégralité du pavillon est en verre ou en un matériau similaire laissant passer les rayons du soleil. On a également proposé des surfaces vitrées multiples, par exemple sous la forme de deux ou trois éléments.

On comprend qu'il est alors nécessaire de prévoir des moyens d'occultation, pour protéger l'habitacle et ses occupants du soleil. On a pensé à l'équiper d'un ou plusieurs vélums rigides, pouvant coulisser dans le pavillon. Cette solution peut éventuellement être étendue au cas où plusieurs zones vitrées existent, sous réserve qu'il reste suffisamment d'espace dans le pavillon pour dissimuler le ou les vélums lorsque ceux-ci ne sont pas utilisés pour occulter la surface vitrée correspondante.

Pour les surfaces vitrées horizontales, on connaît également les stores à enrouleur, que l'on peut déployer pour se protéger du soleil.

Une technique connue de l'art antérieur propose d'entraîner la toile d'un store à enrouleur au moyen d'une barre de tirage rigide guidée en translation à chacune de ses extrémités dans un rail de guidage. Chacun de ces deux rails est pour cela fixé au châssis, encore appelé carrosserie, de chaque côté de la surface vitrée.

Il est classique de proposer que la barre de tirage d'un store à enrouleur soit manoeuvrée à la main au moyen d'une ou de plusieurs poignées Fixées directement sur la barre de tirage. Cette technique s'avère cependant souvent contraignante pour l'utilisateur, qui doit tirer sur la barre de façon homogène et sans à-coup, au risque qu'elle ne se coince en prenant une position légèrement oblique par rapport à la direction transverse à celle des rails.

Il est pour cela préférentiellement proposé une autre technique par entraînement mécanique coordonné des deux extrémités de la barre de tirage, en agissant sur la longueur de deux câbles ou de deux filins identiques reliés chacun à une des extrémités de la barre. Le dispositif mis en oeuvre par cette technique comprend généralement des moyens conventionnels pour pousser et tirer les deux câbles dans des directions opposées autour d'une position moyenne le long d'un chemin de câble, de façon à réaliser l'allongement ou réciproquement le raccourcissement d'une longueur identique de câbles entre l'extrémité du câble lié à la barre et la position moyenne. Ces câbles sont par ailleurs communément maintenus sous tension par l'intermédiaire de poulies, placées le long du chemin de câble.

Le dispositif mis en oeuvre par cette technique peut habituellement être manoeuvré au moyen d'une manivelle, ou bien actionné par un moteur électrique pouvant être commandé par pression sur un bouton-poussoir, par exemple.

Pour assurer le guidage d'au moins une portion des câbles mis en oeuvre par cette technique, il est connu de les faire circule dans des passages rigides, tels que des tubes ou des gorges recouvertes d'un couvercle, conformés pour suivre le chemin de câble prévu. Dans une variante de-cette technique, on connaît aussi, par exemple des documents US-6,582,014, DE 44 22 646 et EP-A-1 359 036, des systèmes de guidage des câbles par l'intermédiaire de lamelles alternées, avec lesquelles les câbles sont en contact direct.

Un inconvénient de cette technique de guidage dans des passages rigides est que les opérations de découpage, de formage et de fixation des tubes ou des couvercles sont souvent complexes.

Un autre inconvénient de cette technique est parfois la difficulté pour introduire des câbles dans des gaines de faibles dimensions.

Encore un autre inconvénient de cette technique provient du bruit engendré par le coulissement des câbles dans ces passages rigides.

Pour diminuer le niveau sonore lié au mouvement des câbles, on a proposé de chemiser les câbles dans des gaines souples en plastique. Il est alors nécessaire de prévoir des moyens de fixation pour assurer le guidage de ces gaines.

On connaît une technique de maintien des gaines à l'aide d'agrafes.

Un inconvénient de cette technique est qu'il est nécessaire d'appliquer les agrafes une à une sur la gaine, ce qui augmente la durée du montage de façon conséquente.

Cet inconvénient se révèle d'autant plus sévère que le câble et par conséquent la gaine sont soumis à des contraintes importantes qui nécessitent un maintien par un grand nombre d'agrafes.

### 3. Objectifs de l'invention

L'invention a notamment pour objectif de pallier ces inconvénients de l'état de l'art.

Plus précisément, un objectif de l'invention est de fournir une technique de store d'occultation d'une paroi vitrée du pavillon d'un véhicule automobile dont les câbles d'entraînement sont efficacement maintenus.

Un autre objectif de l'invention est de fournir une telle technique qui permette de réduire le niveau sonore lié au déploiement ou au repliement de la toile du store.

Encore un objectif de l'invention est de fournir une telle technique qui permette une fixation simple et rapide des gaines de câble.

L'invention a également pour objectif de fournir une telle technique, qui soit simple à mettre en oeuvre et peu coûteuse.

### 4. Exposé de l'invention

Ces objectifs, ainsi que d'autres qui apparaîtront par la suite, sont atteints à l'aide d'un dispositif d'occultation motorisé selon la revendication 1.

Ainsi, l'invention propose, de façon nouvelle, un dispositif d'occultation dont l'élément de support des moyens de motorisation comprend une succession d'éléments de maintien définissant un logement d'une chemise plastique enveloppant un câble et assurant un maintien efficace de cette chemise, pourvus à l'une de leur extrémité d'un évasement permettant un montage simple et rapide de cette dernière.

On précise, que dans le cadre de l'invention, l'expression « orientation opposée » doit être entendue en référence à un plan de symétrie moyen du réceptacle.

On notera par ailleurs qu'un tel dispositif d'occultation peut avantageusement être un store à enrouleur ou un vélum rigide pouvant être déplacé en regard de la surface vitrée.

Selon un mode de réalisation particulièrement avantageux de l'invention, l'évasement de chacun desdits éléments de maintien est sensiblement tourné vers une même extrémité dudit réceptacle.

Ainsi, on facilite l'introduction de la chemise plastique dans le réceptacle dans le sens opposé de celui vers lequel sont tournés les évasements.

Selon l'invention, au moins un desdits évasements présente une base tronconique.

Ainsi, on obtient une variation régulière de la section de l'évasement sur sa longueur.

Selon l'invention, le demi-angle dudit évasement tronconique est compris entre 15 et 25°.

Ainsi, cet angle n'étant ni trop ouvert ni trop fermé, l'évasement permet de faciliter l'introduction de la chemise tout en participant, dans une moindre mesure, à son maintien.

De façon avantageuse, la longueur desdits éléments de maintien est comprise entre 15 et 40 millimètres.

Ainsi, en limitant par conséquent à quelques dizaines le nombre d'élément de maintien mis en oeuvre par mètre de chemise plastique, on simplifie la fabrication de l'élément de support. D'autre part, les éléments de maintien sont suffisamment courts pour permettre de reconstituer de façon acceptable une courbe de faible rayon, en les plaçant sensiblement les uns après les autres.

Selon l'invention, la longueur de chacun desdits évasements représente 20 à 60 pourcents de la longueur dudit élément de maintien correspondant.

Avantageusement, l'ouverture dudit évasement est biseauté.

Ainsi, on facilite notamment le démoulage des moyens de maintien sur l'élément de support, en prévoyant un angle de dépouille.

Dans au moins un mode de réalisation de l'invention, au moins un desdits évasements présente une forme hyperbolique.

Dans encore d'autres modes de réalisation de l'invention, la section de l'évasement peut présenter, sur sa longueur, une variation régulière définie par une fonction logarithmique, en puissance, etc.

Selon un mode de réalisation de l'invention, lesdits éléments de maintien sont sensiblement identiques.

Dans d'autres modes de réalisation de l'invention, les éléments de maintien peuvent cependant être différents. Ces éléments peuvent ainsi être avantageusement identiques deux à deux.

De façon avantageuse, l'évasement d'au moins un desdits éléments de maintien recouvre au moins une partie d'un élément de maintien qui lui est consécutif.

Ainsi, on augmente la longueur totale sur laquelle la chemise plastique est maintenue.

L'invention concerne également un élément de support pour moyens de motorisation d'un dispositif d'occultation pour véhicule automobile, comprenant des moyens de maintien d'une chemise plastique à l'intérieur de laquelle circule un câble, lesdits moyens de maintien comprenant une pluralité d'éléments de maintien successifs de section sensiblement semi-circulaite, définissant un réceptacle pour ladite chemise, et disposés alternativement suivant une orientation opposée d'un côté ou de l'antre dudit réceptacle, au moins un desdits éléments de maintien présentant un évasement d'aide à l'introduction de ladite chemise à l'une de leurs extrémités.

Avantageusement, un élément de support tel que décrit ci-dessus comprend au moins un renfort métallique transversal solidarisé à chacune de ses deux extrémités avec un élément latéral en matière plastique comprenant une partie de ladite pluralité desdits moyens de maintien.

Ainsi on obtient un élément de support rigide et de mise en oeuvre particulièrement simple, dont la masse est par ailleurs convenable.

L'invention concerne encore un véhicule automobile à pavillon vitré, comprenant un dispositif d'occultation d'une surface vitrée du pavillon tel que décrit ci-dessus.

### 5. Liste des figures

D'autres caractéristiques et avantages de l'invention apparaîtront plus clairement à la lecture de la description suivante de modes de réalisation particuliers de l'invention, donnés à titre de simples exemples illustratifs et non limitatifs, et des dessins annexés parmi lesquels :
- la figure 1 présente un store selon l'art antérieur;
- la figure 2 est une vue schématique en perspective des moyens de maintien de la chemise sur l'élément de support, présenté en figure 1, le long d'une des portions courbes du trajet de câble ;
- la figure 3 est un représentation détaillée des éléments de maintien de la figure 2 suivant une vue de dessus de l'élément de support ;
- la figure 4 est un vue en coupe d'un élément de maintien ;
- la figure 5 est une reconstitution d'une coupe des éléments de maintien présentés en figure 3 suivant un plan A, dans une représentation de la ligne moyenne du réceptacle suivant une droite;
- la figure 6 est une vue de dessus d'un élément de support d'un store selon l'invention ;
- les figures 7 et 8 illustrent de façon détaillée, respectivement dans des vues de dessous et de côtés, la forme de deux éléments de maintien successifs d'un élément latéral composant l'élément de support présenté en figure 6.

### 6. Description détaillée de l'invention

### 6.1 Rappel du principe de l'invention

Le principe général de l'invention repose donc sur une nouvelle approche pour maintenir la chemise d'un câble sur un élément de support du moteur d'un store, en prévoyant de recevoir cette chemise dans un réceptacle défini par une succession d'éléments de maintien de section semi-circulaire disposés alternativement sur l'un ou l'autre de ses côtés, et présentant une extrémité évasée pour faciliter l'introduction de la chemise dans le réceptacle.

L'invention propose notamment, dans au moins un mode de réalisation, de prévoir des éléments de maintien identiques deux à deux.

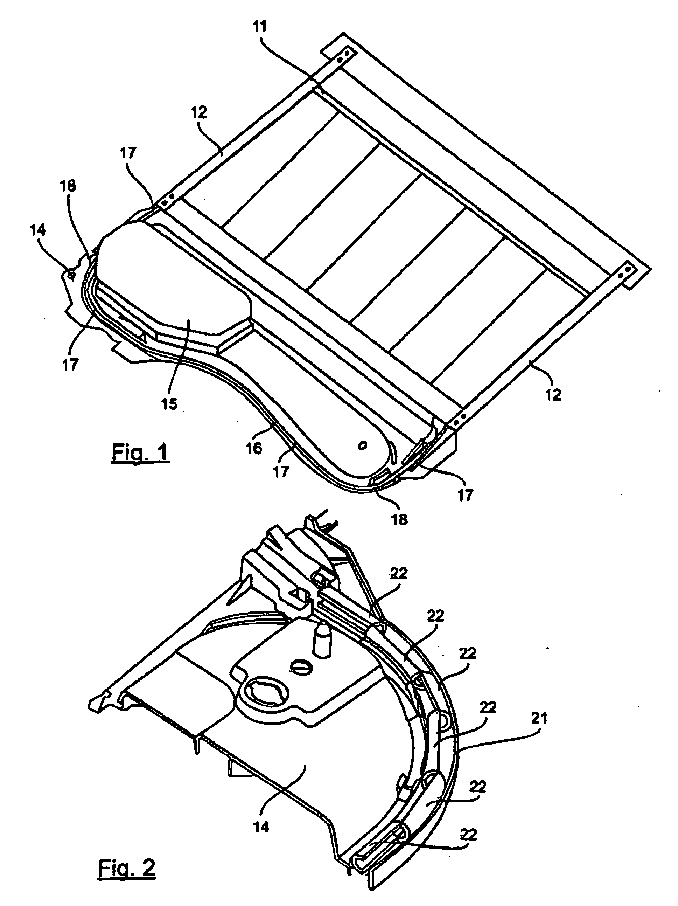

Comme déjà mentionné, le dispositif selon l'invention est destiné à permettre l'occultation d'une surface vitrée de pavillon. Le mode de réalisation décrit par la suite concerne un store à enrouleur actionné par un moteur électrique dont la toile peut être déployée ou repliée le long d'un pavillon fixe entièrement vitré, ainsi que cela est illustré figure 1.

La barre de tirage 11 de ce store est guidée dans deux rails 12 non parallèles solidaires à l'avant du véhicule, d'une traverse transversale métallique fixée sur la carrosserie et, à l'arrière du véhicule, d'un élément de support 14 des moyens de motorisation du store, en manière plastique. La structure ainsi composée des rails 12, de l'élément de support 14 et de la traverse avant 13 forme un cadre pour le store.

Il convient de noter que, pour réduire les coûts de fabrication et de montage du store à l'intérieur de l'habitacle du véhicule, l'élément de support est réalisé en une seule pièce par moulage par injection. Dans une variante de ce mode de réalisation, il peut également être envisagé de thermoformer l'élément de support.

Les câbles de type polytorons permettant de déplacer la barre de tirage sont entraînés par les moyens de motorisation du store comprenant une poulie solidaire d'un motoréducteur 15. Ils sont maintenus le long des rails et sur l'élément de support dans des chemises souples 16, encore appelées gaines, en plastique.

Comme l'illustre la figure 1, le trajet de chaque câble présente une forme générale en « U » et comprend des portions sensiblement rectilignes 17 et des portions courbes 18.

On présente en relation avec la figure 2, une vue schématique en perspective des moyens de maintien dans un réceptacle 21 de la chemise d'un câble, d'un diamètre extérieur de six millimètres, sur l'élément de support le long d'une des portions courbes du trajet de câble.

La partie en arc de cercle du réceptacle 21 représentée sur la figure 2 est formée de six éléments de maintien 22 de section sensiblement semi-circulaire, disposés alternativement de chaque côté du réceptacle.

Ces éléments 22, identiques deux à deux, sont agencés de façon qu'un élément selon une première structure succède à un élément selon une deuxième structure, et réciproquement. Par ailleurs, deux éléments de maintien 22 successifs sont orientés suivant une direction opposée, de façon à former un canal recevant la chemise tubulaire.

Dans ce mode de réalisation, les éléments de maintien 22 selon la première structure présentent une longueur de l'ordre de 15 millimètres et les éléments selon la deuxième structure une longueur de l'ordre de 30 millimètres.

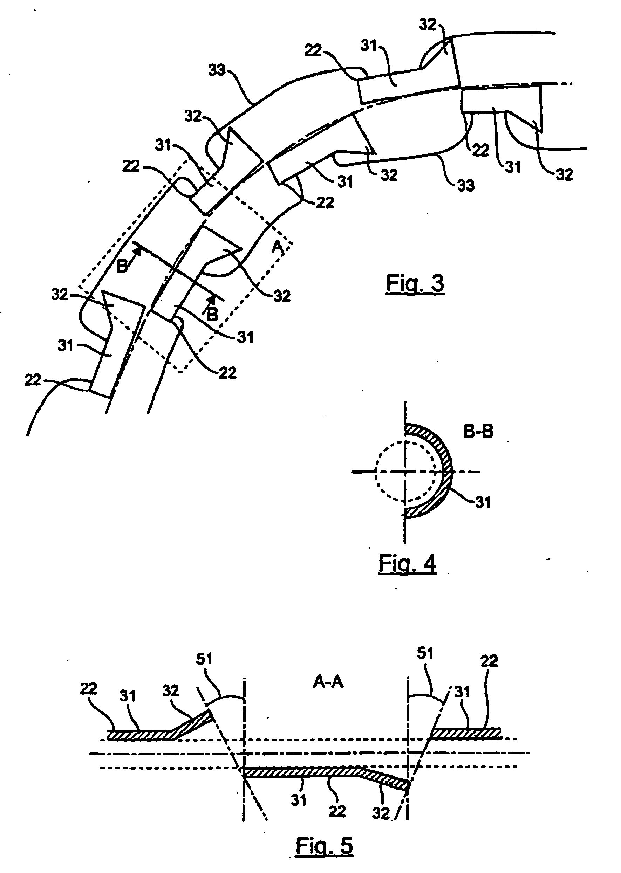

La figure 3 est une représentation plus précise des éléments de maintien de la figure 2 suivant une vue de dessus de l'élément de support. Il convient de noter que, par soucis de clarté, les dimensions angulaires ont été exagérées sur la figure 3.

Chaque élément de maintien 22, d'épaisseur constante égale à deux millimètres, présente une portion semi-cylindrique 31, de diamètre intérieur 9 millimètres, comme précisé sur la figure 4. Cette portion semi-cylindrique 31 se prolonge par un évasement 32 à base tronconique, de demi-angle égal à 21°, facilitant l'introduction de la chemise. Dans ce mode de réalisation, ces évasements 32, d'une longueur de 8 millimètres, constituent une partie substantielle de l'élément de maintien. Un rayon de raccord est en outre prévu entre la portion 31 et l'évasement 32.

De façon à faciliter l'introduction progressive de la chemise sous chacun des éléments de maintien successifs, ces évasements sont tournés vers une même extrémité du réceptacle.

L'élément de support forme par ailleurs un ensemble monobloc avec les éléments de maintien, la surface extérieure de ces derniers étant solidarisée à la peau 33 de l'élément de support.

De façon à assurer le maintien de la chemise sur toute sa longueur par les élément de maintien dans cette portion courbe, il a été prévu d'orienter les éléments de maintien successifs en fonction d'un angle de fermeture.

La figure 5 est une reconstitution d'une coupe suivant le plan A des éléments de maintien, dans une représentation de la ligne moyenne du réceptacle suivant une droite, permettant de préciser cet aspect.

On note que l'angle de fermeture 51 est avantageusement constant entre deux éléments de maintien 22 successifs pour épouser harmonieusement la forme courbée du réceptacle. Il vaut 15° dans ce mode de réalisation.

### 6.2. Mode de réalisation de l'invention

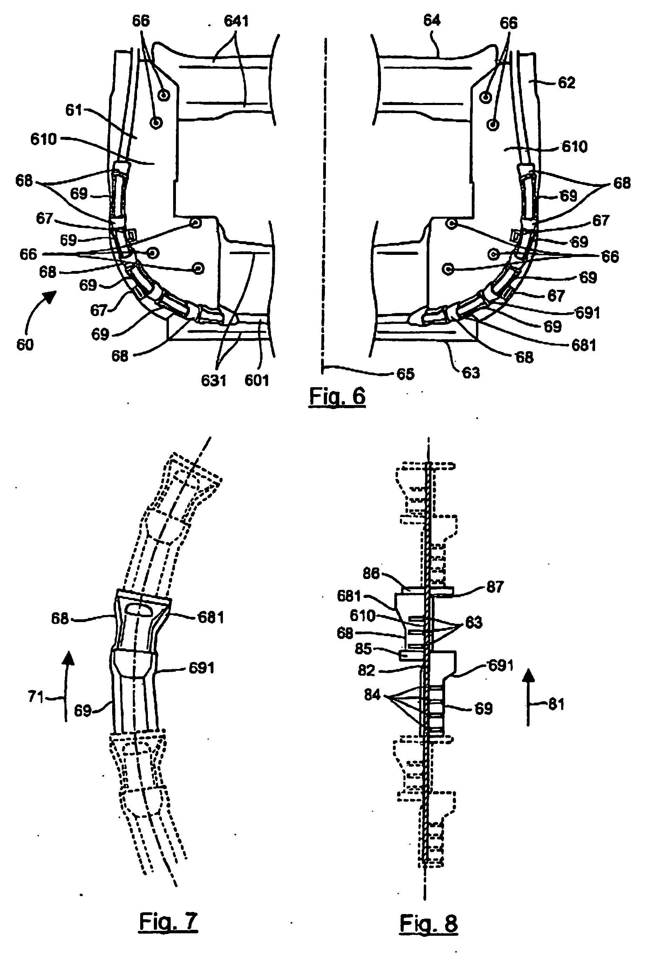

L'élément de support 60 des moyens de motorisation du store, destiné à être monté au niveau de la traverse arrière du toit du véhicule, est réalisé à partir de deux éléments latéraux de maintien et de guidage de chemise de câble 61 et 62, en matière plastique, encore appelés renforts latéraux, et d'une paire de renforts transversaux métallique 63, 64. Comme on peut le voir sur la figure 6, l'élément latéral gauche 61 et l'élément latéral droit 62 peuvent être déduits par une symétrie par rapport à l'axe longitudinal 65 du cadre de store.

Dans ce mode de réalisation de l'invention, les éléments latéraux 61, 62 sont assemblés mécaniquement par rivets 66 avec les renforts 63, 64. Toutefois, dans des variantes de ce mode de réalisation, d'autres techniques d'assemblages adaptées peuvent aussi être envisagées, telles que, par exemple l'assemblage par boulons, par collage, ... Par ailleurs, des réceptacles 67 pour crochet de clippage sont également prévus pour compléter la fixation des éléments latéraux 61, 62 sur les renforts 63, 64.

Ces renforts 63, 64 assurent la rigidification de l'élément de support, notamment grâce à leurs nervures 631, 641 qui leur confèrent une résistance appropriée. Ils sont réalisés dans de la tôle emboutie pour réduire leur coût de fabrication et alléger le store.

Dans une variante de l'invention, on peut également prévoir un renfort transversal métallique unique.

Les éléments latéraux 61 et 62 présentent un canal de réception d'une chemise 601 du câble, ou réceptacle, essentiellement courbé au niveau du renfort arrière 63. Autour de ce réceptacle sont disposés alternativement des éléments de maintien d'un premier type 68, ou d'un second type 69. Les éléments de maintien 68 saillissent au-dessus de la peau 610 de l'élément de support et les éléments de maintien 69, plus long que les éléments de maintien 68, au-dessous.

Chacun des éléments de maintien 68 ou 69, de section sensiblement semi-circulaire, présente un évasement 681 ou 691 au niveau de son extrémité tournée vers la partie avant du cadre (en référence à la traverse avant sur laquelle est montée cette partie du cadre). Ces évasements 681, 691, permettant de simplifier le montage en guidant la chemise de câble lors de son introduction dans le réceptacle, sont à base tronconique.

Les figures 7 et 8 sont des vues de détail, respectivement de dessous et de côté, de deux éléments de maintien consécutifs 68 et 69 de l'élément latéral 61 (les éléments de maintien suivants et précédents sont représentés en pointillés sur ces figures). Pour repère, la pointe de la flèche de repérage 71, 81 est orientée sur ces figures vers l'avant du cadre.

On distingue clairement sur la figure 8 que l'évasement 691 est biseauté (biseaux 82) pour faciliter l'introduction de la chemise (non représentée) et réduire les nuisances sonores résultant du coulissement du câble.

Des nervures 83, 84 relient les enveloppes des éléments de maintien 68 et 69 à la peau 610 de l'élément latéral 61 de façon à permettre de maintenir la chemise convenablement, tout en limitant l'épaisseur de ces enveloppes.

Comme illustré sur la figure 8, l'élément de maintien 69 présente à la jonction entre l'évasement 691 et l'élément 68 une collerette 85 de transition avec l'élément de maintien 68, faisant continuité avec la peau 610. Une seconde collerette 86 est également prévue pour assurer une continuité de moulage entre l'évasement 681, dont l'extrémité présente un biseau 87, et l'élément de retenue 69.

### 6.3. Au caractéristiques et avantages de l'invention

D'autres variantes des modes de réalisation détaillés ci-dessus peuvent bien entendu être envisagées sans sortir du cadre de l'invention, parmi lesquelles :
- au moins un des évasements peut présenter une forme hyperbolique ;
- l'évasement d'un ou plusieurs des éléments de maintien peut recouvrir au moins une partie d'un élément de maintien qui lui est consécutif, de façon à mieux fermer le canal formant le réceptacle de la chemise plastique dans laquelle circule le câble.

## Revendications

1. Dispositif d'occultation motorisé pour au moins une surface vitrée de pavillon de véhicule, comprenant un élément de support (60) des moyens de motorisation dudit dispositif, solidaire dudit pavillon, et une barre de tirage (11) actionnée par au moins un câble entraîné par lesdits moyens de motorisation, ladite barre de tirage (11) entraînant au moins un élément d'occultation,
ledit élément de support (60) présentant une peau (610) à partir de laquelle saillissent des moyens de maintien d'une chemise plastique à l'intérieur de laquelle circule ledit câble,
**caractérisé en ce que** lesdits moyens de maintien comprennent une pluralité d'éléments de maintien 68 , 69) successifs de section sensiblement semi-circulaire, définissant un réceptacle (67) pour ladite chemise, comprenant des éléments de maintien d'un premier type (68) et des éléments de maintien d'un second type (69), disposés alternativement suivant une orientation opposée d'un côté ou de l'autre dudit réceptacle (67) :
- lesdits éléments de maintien dudit premier type (68) saillissant au-dessus de ladite peau (610), et
- lesdits éléments de maintien dudit second type (69) saillissant au-dessous de ladite peau et étant plus longs que lesdits éléments de maintien dudit premier type (68) ;
**en ce que** lesdits éléments de maintien présentent chacun un évasement (681, 691) d'aide à l'introduction de ladite chemise à l'une de ses extrémités, ledit évasement (681, 691) présentant une base tronconique, dont le demi-angle est compris entre 15 et 25°, et dont la longueur représente 20 à 60 pourcents de la longueur dudit élément de maintien (68 , 69) correspondant ;
et **en ce que** chacun desdits éléments de maintien (69, 68) présente une collerette (85, 86) de transition, à la jonction entre son évasement (691,681) et ledit élément de maintien consécutif (68, 69), ladite collerette faisant continuité avec ladite peau (610) et assurant une continuité entre les deux éléments de maintien.

2. Dispositif d'occultation selon la revendication 1, **caractérisé en ce que** l'évasement (681 ; 691) de chacun desdits éléments de maintien (68, 69) est sensiblement tourné vers une même extrémité dudit réceptacle (67).

3. Dispositif d'occultation selon l'une des revendications 1 à 2, **caractérisé en ce que** la longueur desdits éléments de maintien (68 , 69) est comprise entre 15 et 40 millimètres.

4. Dispositif d'occultation selon l'une quelconque des revendications 1 à 3, **caractérisé en ce que** l'ouverture dudit évasement (681, 691) est biseautée.

5. Dispositif d'occultation selon l'une quelconque des revendication 1 à 4, **caractérisé en ce que** lesdits éléments de maintien (68 , 69) sont sensiblement identiques deux à deux.

6. Dispositif d'occultation selon l'une quelconque des revendications 1 à 5, **caractérisé en ce que** l'évasement (681, 691) d'au moins un desdits éléments de maintien (68 , 69) recouvre au moins une partie d'un élément de maintien (68 , 69) qui lui est consécutif.

7. Elément de support (60) pour moyens de motorisation d'un dispositif d'occultation pour véhicule automobile, présentant une peau (610) à partir de laquelle saillissent des moyens de maintien d'une chemise plastique à l'intérieur de laquelle circule un câble,
**caractérisé en ce que** lesdits moyens de maintien comprenant une pluralité d'éléments de maintien (68 , 69) successifs de section sensiblement semi-circulaire, définissant un réceptacle (67) pour ladite chemise, comprenant des éléments de maintien d'un premier type (68) et des éléments de maintien d'un second type (69), et disposés alternativement suivant une orientation opposée d'un côté ou de l'autre dudit réceptacle (67) :
- lesdits éléments de maintien dudit premier type (68) saillissant au-dessus de ladite peau (610), et
- lesdits éléments de maintien dudit second type (69) saillissant au-dessous de ladite peau et étant plus longs que lesdits éléments de maintien dudit premier type (68) ;
**en ce que** lesdits éléments de maintien (68 , 69) présentent chacun un évasement (681, 691) d'aide à l'introduction de ladite chemise à l'une de leurs extrémités, ledit évasement (681 , 691) présentant une base tronconique, dont le demi-angle est compris entre 15 et 25°, et dont la longueur représente 20 à 60 pourcents de la longueur dudit élément de maintien (68, 69) correspondant ;
et **en ce que** chacun desdits éléments de maintien (69, 68) présente une collerette (85, 86) de transition, à la jonction entre son évasement (691, 681) et ledit élément de maintien consécutif (68, 69), ladite collerette faisant continuité avec ladite peau (610) et assurant une continuité entre les deux éléments de maintien.

8. Elément de support (14 ; 60) selon la revendication 7, **caractérisé en ce qu'**il comprend au moins un renfort métallique transversal solidarisé à chacune de ses deux extrémités avec un élément latéral (61 , 62) en matière plastique comprenant une partie de ladite pluralité desdits moyens de maintien.

9. Véhicule automobile comprenant une surface vitrée au niveau du pavillon **caractérisé en ce qu'**il comprend au moins un dispositif d'occultation motorisé de ladite surface vitrée, comprenant un élément de support (14 ; 60) des moyens de motorisation dudit dispositif d'occultation, solidaire dudit pavillon, et une barre de tirage (11) actionnée par au moins un câble entraîné par lesdits moyens de motorisation, ladite barre de tirage (11) entraînant au moins un élément d'occultation,
ledit élément de support (14 ; 60) présentant une peau (610) à partir de laquelle saillissent des moyens de maintien d'une chemise plastique à l'intérieur de laquelle circule ledit câble,
**caractérisé en ce que** lesdits moyens de maintien comprenent une pluralité d'éléments de maintien (68 , 69) successifs de section sensiblement semi-circulaire, définissant un réceptacle (67) pour ladite chemise, comprenant des éléments de maintien d'un premier type (68) et des éléments de maintien d'un second type (69), et disposés alternativement suivant une orientation opposée d'un côté ou de l'autre dudit réceptacle (21 ; 67) :
- lesdits éléments de maintien dudit premier type (68) saillissant au-dessus de ladite peau (610), et
- lesdits éléments de maintien dudit second type (69) saillissant au-dessous de ladite peau et étant plus longs que lesdits éléments de maintien dudit premier type (68) ;
**en ce que** lesdits éléments de maintien (68, 69) présentent chacun un évasement (681 , 691) d'aide à l'introduction de ladite chemise à l'une de leurs extrémités, ledit évasement (681 , 691) présentant une base tronconique, dont le demi-angle est compris entre 15 et 25°, et dont la longueur représente 20 à 60 pourcents de la longueur dudit élément de maintien (68, 69) correspondant ;et **en ce que** chacun desdits éléments de maintien (69, 68) présente une collerette (85, 86) de transition, à la jonction entre son évasement (691, 681) et ledit élément de maintien consécutif (68, 69), ladite collerette faisant continuité avec ladite peau (610) et assurant une continuité entre les deux éléments de maintien.

## Claims

1. Motorised masking device for at least one glazed surface of a vehicle roof, comprising a supporting element (60) for means for motorising the said device, which is integral with the said roof, and a draw-bear (11) which is activated by at least one cable driven by the said motorising means, the said draw-bar (11) driving at least one masking element,
the said supporting element (60) having a film (610), projecting from which are means for holding a plastic sheath within which the said cable runs, **characterised in that** the said holding means comprise a plurality of successive holding elements (68, 69) of substantially semi-circular section, defining a receptacle (67) for the said sheath, comprising holding elements of a first type (68) and holding elements of a second type (69), disposed alternately in opposite directions on either side of the said receptacle (67):
- the said holding elements of the said first type (68) projecting above the said film (610), and
- the said holding elements of the said second type (69) projecting below the said film and being longer than the said holding elements of the said first type (68);
**in that** the said holding elements each have a widened portion (681, 691) for assisting in the introduction of the said sheath at one of its ends, the said widened portion (681, 691) having a truncated-cone-shaped base, the half-angle of which is between 15 and 25° and the length of which represents 20 to 60 percent of the length of the said corresponding holding element (68, 69);
and **in that** each of the said holding elements (68, 69) has a transition collar (85, 86) at the junction between its widened portion (691, 681) and the said consecutive holding element (68, 69), the said collar forming continuity with the said film (610) and ensuring continuity between the two holding elements.

2. Masking device according to claim 1, **characterised in that** the widened portion (681; 691) of each of the said holding elements (68, 69) substantially faces towards the same end of the said receptacle (67).

3. Masking device according to either of claims 1 or 2, **characterised in that** the length of the said holding elements (68, 69) is between 15 and 40 millimetres.

4. Masking device according to any of claims 1 to 3, **characterised in that** the opening of the said widened portion (681, 691) is bevelled.

5. Masking device according to any of claims 1 to 4, **characterised in that** the said holding elements (68, 69) are substantially identical in pairs.

6. Masking device according to any of claims 1 to 5, **characterised in that** the widened portion (681, 691) of at least one of the said holding elements (68, 69) overlaps at least part of a holding element (68, 69) which is consecutive to it.

7. Supporting element (60) for means for motorising a masking device for a motor vehicle, said supporting element having a film (610), projecting from which are means for holding a plastic sheath within which a cable runs,
**characterised in that** the said holding means comprise a plurality of successive holding elements (68, 69) of substantially semi-circular section, defining a receptacle (67) for the said sheath, comprising holding elements of a first type (68) and holding elements of a second type (69), and disposed alternately in opposite directions on either side of the said receptacle (67):
- the said holding elements of the said first type (68) projecting above the said film (610), and
- the said holding elements of the said second type (69) projecting below the said film and being longer than the said holding elements of the said first type (68);
**in that** the said holding elements (68, 69) each have a widened portion (681, 691) for assisting in the introduction of the said sheath at one of their ends, the said widened portion (681, 691) having a truncated-cone-shaped base, the half-angle of which is between 15 and 25° and the length of which represents 20 to 60 percent of the length of the said corresponding holding element (68, 69);
and **in that** each of the said holding elements (68, 69) has a transition collar (85, 86) at the junction between its widened portion (691, 681) and the said consecutive holding element (68, 69), the said collar forming continuity with the said film (610) and ensuring continuity between the two holding elements.

8. Supporting element (14; 60) according to claim 7, **characterised in that** it comprises at least one transverse metal reinforcement fastened to each of its two ends with a lateral element (61, 62) made of plastic material comprising some of the said plurality of the said holding means.

9. Motor vehicle comprising a glazed surface at the roof, **characterised in that** it comprises at least one motorised masking device for the said glazed surface comprising a supporting element (14; 60) for the means for motorising the said masking device, which is integral with the said roof, and a draw-bar (11) which is activated by at least one cable driven by the said motorising means, the said draw-bar (11) driving at least one masking element,
the said supporting element (14; 60) having a film (610), projecting from which are means for holding a plastic sheath within which the said cable runs, **characterised in that** the said holding means comprise a plurality of successive holding elements (68, 69) of substantially semi-circular section, defining a receptacle (67) for the said sheath, comprising holding elements of a first type (68) and holding elements of a second type (69), and disposed alternately in opposite directions on either side of the said receptacle (21; 67):
- the said holding elements of the said first type (68) projecting above the said film (610), and
- the said holding elements of the said second type (69) projecting below the said film and being longer than the said holding elements of the said first type (68);
**in that** the said holding elements (68, 69) each have a widened portion (681, 691) for assisting in the introduction of the said sheath at one of their ends, the said widened portion (681, 691) having a truncated-cone-shaped base, the half-angle of which is between 15 and 25° and the length of which represents 20 to 60 percent of the length of the said corresponding holding element (68, 69); and **in that** each of the said holding elements (68, 69) has a transition collar (85, 86) at the junction between its widened portion (691, 681) and the said consecutive holding element (68, 69), the said collar forming continuity with the said film (610) and ensuring continuity between the two holding elements.

## Patentansprüche

1. Motorisierte Vorrichtung zum Verdunkeln für mindestens eine Glasfläche eines Kraftfahrzeugdachs, die ein Tragelement (60) der Antriebsmittel der Vorrichtung, das fest mit dem Dach verbunden ist, und eine Zugstange (11) aufweist, die von mindestens einem Kabel betätigt wird, das von den Antriebsmitteln angetrieben wird, wobei die Zugstange (11) mindestens ein Verdunkelungselement antreibt,
wobei das Tragelement (60) eine Haut (610) aufweist, ausgehend von welcher Haltemittel einer Plastikhülse, in deren Innerem das Kabel zirkuliert, vorstehen,
**dadurch gekennzeichnet, dass** die Haltemittel eine Vielzahl aufeinanderfolgender Halteelemente (68, 69) mit einem im Wesentlichen halbkreisförmigen Querschnitt aufweisen, die eine Aufnahme (67) für die Hülse definieren, die Halteelemente eines ersten Typs (68) und Halteelemente eines zweiten Typs (69) aufweisen, die abwechselnd entlang einer entgegengesetzten Ausrichtung an einer Seite oder der anderen der Aufnahme (67) angeordnet sind:
- wobei die Halteelemente des ersten Typs (68) oberhalb der Haut (610) vorstehen und
- die Halteelemente des zweiten Typs (69) unterhalb der Haut vorstehen und länger sind als die Haltemittel des ersten Typs (68);
dass die Halteelemente jeweils eine Erweiterung (681, 691) zum Unterstützen des Einführens der Hülse an einem ihrer Enden aufweisen, wobei die Erweiterung (681, 691) eine kegelstumpfförmige Basis aufweist, deren Halbwinkel zwischen 15° und 25° liegt, und deren Länge 20 bis 60 Prozent der Länge des entsprechenden Halteelements (68, 69) darstellt;
und dass jedes der Halteelemente (69, 68) einen Übergangskragen (85, 86) an der Verbindung zwischen seiner Erweiterung (691, 681) und dem darauf folgenden Halteelement (68, 69) aufweist, wobei der Kragen die Kontinuität mit der Haut (610) bildet und eine Kontinuität zwischen den zwei Halteelementen sicherstellt.

2. Verdunkelungsvorrichtung nach Anspruch 1, **dadurch gekennzeichnet, dass** die Erweiterung (681; 691) jedes der Halteelemente (68, 69) im Wesentlichen zu einem Ende der Aufnahme (67) gekehrt ist.

3. Verdunkelungsvorrichtung nach einem der Ansprüche 1 bis 2, **dadurch gekennzeichnet, dass** die Länge der Halteelemente (68, 69) zwischen 15 und 40 Millimeter liegt.

4. Verdunkelungsvorrichtung nach einem der Ansprüche 1 bis 3, **dadurch gekennzeichnet, dass** die Öffnung der Erweiterung (681, 691) abgeschrägt ist.

5. Verdunkelungsvorrichtung nach einem der Ansprüche 1 bis 4, **dadurch gekennzeichnet, dass** die Halteelemente (68, 69) im Wesentlichen in Paaren identisch sind.

6. Verdunkelungsvorrichtung nach einem der Ansprüche 1 bis 5, **dadurch gekennzeichnet, dass** die Erweiterung (681, 691) mindestens eines der Halteelemente (68, 69) mindestens einen Teil eines Halteelemente (68, 69), das auf es folgt, abdeckt.

7. Tragelement (60) für Antriebsmittel einer Verdunkelungsvorrichtung für Kraftfahrzeug, die eine Haut (610) aufweist, von welcher ausgehend Haltemittel einer Plastikhülse, in deren Innerem ein Kabel zirkuliert, vorstehen,
**dadurch gekennzeichnet, dass** die Haltemittel eine Vielzahl aufeinanderfolgender Halteelemente (68, 69) mit im Wesentlichen halbkreisförmigem Querschnitt umfassen, die eine Aufnahme (67) für die Hülse definieren, die Halteelemente eines ersten Typs (68) und Halteelemente eines zweiten Typs (69) aufweisen und abwechselnd entlang einer entgegengesetzten Ausrichtung auf einer Seite oder der anderen der Aufnahme (67) angeordnet sind:
- wobei die Halteelemente des ersten Typs (68) oberhalb der Haut (610) vorstehen und
- die Halteelemente des zweiten Typs (69) unterhalb der Haut vorstehen und länger sind als die Halteelemente des ersten Typs (68);
dass die Halteelemente (68, 69) jeweils eine Erweiterung (681, 691) zum Unterstützen des Einführens der Hülse an einem ihrer Enden aufweisen,
wobei die Erweiterung (681, 691) eine kegelstumpfförmige Basis aufweist, deren Halbwinkel zwischen 15 und 25° liegt und deren Länge 20 bis 60 Prozent der Länge des entsprechenden Halteelements (68, 69) darstellt;
und dass jedes der Halteelemente (69, 68) einen Übergangskragen (85, 86) an der Verbindung zwischen seiner Erweiterung (691, 681) und dem darauf folgenden Halteelement (68, 69) aufweist, wobei der Kragen die Kontinuität mit der Haut (610) bildet und eine Kontinuität zwischen den zwei Halteelementen sicherstellt.

8. Tragelement (14; 60) nach Anspruch 7, **dadurch gekennzeichnet, dass** es mindestens eine metallische Querverstärkung aufweist, die an jedem ihrer zwei Enden mit einem seitlichen Element (61, 62) aus Plastik fest verbunden ist, das einen Teil der Vielzahl der Haltemittel aufweist.

9. Kraftfahrzeug, das eine Glasfläche auf dem Niveau des Dachs aufweist, **dadurch gekennzeichnet, dass** es mindestens eine motorisierte Verdunkelungsvorrichtung der Glasfläche aufweist, die ein Tragelement (14; 60) der Antriebsmittel der Verdunkelungsvorrichtung, die fest mit dem Dach verbunden ist, und eine Zugstange (11) aufweist, die von mindestens einem Kabel betätigt wird, das von den Antriebsmitteln angetrieben wird, wobei die Zugstange (11) mindestens ein Verdunkelungselement antreibt,
wobei das Tragelement (14; 60) eine Haut (610) aufweist, von der ausgehend Haltemittel einer Plastikhülse, in deren Innerem das Kabel zirkuliert, vorstehen,
**dadurch gekennzeichnet, dass** die Haltemittel eine Vielzahl aufeinanderfolgender Halteelemente (68, 69) mit im Wesentlichen halbkreisförmigem Querschnitt aufweisen, die eine Aufnahme (67) für die Hülse bilden, die Halteelemente eines ersten Typs (68) und Halteelemente eines zweiten Typs (69) umfassen und die abwechselnd entlang einer entgegengesetzten Ausrichtung auf einer Seite oder der anderen Seite der Aufnahme (21; 67) angeordnet sind:
- wobei die Halteelemente des ersten Typs (68) oberhalb der Haut (610) vorstehen und
- die Halteelemente des zweiten Typs (69) unterhalb der Haut vorstehen und länger sind als die Halteelemente des ersten Typs (68);
dass die Halteelemente (68, 69) jeweils eine Erweiterung (681, 691) zum Unterstützen des Einführens der Hülse an einem ihrer Enden aufweisen, wobei die Erweiterung (681, 691) eine kegelstumpfförmige Basis aufweist, deren Halbwinkel zwischen 15 und 25° liegt und deren Länge 20 bis 60 Prozent der Länge des entsprechenden Halteelements (68, 69) darstellt, und dass jedes der Halteelemente (69, 68) einen Übergangskragen (85, 86) an der Verbindung zwischen seiner Erweiterung (691, 681) und dem darauf folgenden Halteelement (68, 69) aufweist, wobei der Kragen die Kontinuität mit der Haut (610) bildet und eine Kontinuität zwischen den zwei Halteelementen sicherstellt.
